Europäisches Patentamt

(19) European Patent Office

Office européen des brevets

(11) Publication number: **0 013 478**
**B1**

# EUROPEAN PATENT SPECIFICATION

(12)

(45) Date of publication of patent specification: **01.12.82**

(51) Int. Cl.³: **C 08 F 2/16**

(21) Application number: **79302639.4**

(22) Date of filing: **20.11.79**

(54) **Manufacture of polymer dispersions and coating compositions derived from them.**

(30) Priority: **07.12.78 GB 4758578**
**18.06.79 GB 7921091**
**17.07.79 GB 7924872**

(43) Date of publication of application:
**23.07.80 Bulletin 80/15**

(45) Publication of the grant of the patent:
**01.12.82 Bulletin 82/48**

(84) Designated Contracting States:
**AT BE DE FR GB IT LU NL SE**

(56) References cited:
**DE - A - 2 645 300**
**FR - A - 2 343 754**

(73) Proprietor: **IMPERIAL CHEMICAL INDUSTRIES PLC**
**Imperial Chemical House Millbank**
**London SW1P 3JF (GB)**

(73) Proprietor: **DULUX AUSTRALIA LTD**
**1, Nicholson Street**
**Melbourne Victoria, 3001 (AU)**

(72) Inventor: **Graetz, Clive W.**
**792, Highbury Road**
**Glen Waverly, Victoria (AU)**
Inventor: **Thompson, Morice W.**
**"Urishay", Highfield Lane**
**Cox Green Maidenhead, Berkshire (GB)**
Inventor: **Waite, Frederick A.**
**12, Sherborne Walk**
**Farnham Common Buckinghamshire (GB)**
Inventor: **Waters, Julian A.**
**89 Wallingford Road**
**Goring-on-Thames, Oxfordshire (GB)**

(74) Representative: **Wood, Dennis John Cecil et al,**
**Imperial Chemical Industries PLC Legal**
**Department: Patents Thames House North**
**Millbank**
**London SW1P 4QG (GB)**

Courier Press, Leamington Spa, England.

# 0013478

## Manufacture of polymer dispersions and coating compositions derived from them

This invention relates to the production of dispersions of polymer particles in aqueous liquid media in which the particles are stabilised against gross flocculation. More particularly, it relates to producing dispersions in which the stabilisation of the particles is achieved substantially by means of a steric mechanism. The invention also relates to coating compositions derived from dispersions so made.

By "gross flocculation" is meant herein a state in which, even at low solids contents, the dispersions contain many multi-particle aggregates.

Polymer dispersions are well known in which the particles of polymer are stably dispersed in water or an aqueous medium (in which by definition the polymer is insoluble), the stability of the particles being achieved at least to a major extent by the presence on the surface of the particles of electrical charges whereby repulsive forces are generated which counteract the natural tendency of the particles to attract one another. Such dispersions are the products of the so-called emulsion polymerisation processes, a characteristic of which is that the monomer being polymerised, as well as the polymer which is formed, is insoluble in the aqueous medium. The initiation of the polymerisation, and the maintenance of a fine emulsion of the monomer in the aqueous medium, are effected by ionisable species which are dissolved in the aqueous phase.

Other polymer dispersions are well known in which the particles of polymer are stably dispersed in a non-aqueous organic liquid medium (in which again the polymer is insoluble), and in which the particles are stabilised exclusively by means of their having attached to their surfaces polymeric chains of a nature such as to be inherently soluble in the non-aqueous medium; in this way there is formed around each particle a steric barrier of solvated and extended polymer chains which supplies the repulsive force necessary to prevent adjacent particles coming into contact with each other. The charge-stabilisation mechanism previously referred to is in general not applicable to non-aqueous liquid systems. This second type of polymer dispersion is most frequently obtained by means of a so-called non-aqueous dispersion polymerisation process, which has the characteristic that, whilst the polymer ultimately formed is insoluble in the non-aqueous liquid, the monomer being polymerised is actually soluble therein. The polymerisation is carried out in the presence of a steric stabiliser which is an amphipathic molecule incorporating one component which is inherently soluble in the liquid medium and another component which has an affinity for the surface of the polymer particles as they form and which in consequence becomes anchored thereto. A full treatment of the subject of non-aqueous dispersions is to be found in "Dispersion Polymerisation in Organic Media", ed. K. E. J. Barrett (John Wiley, 1975), and there are many published patent specifications relating to it, for example British Specifications Nos. 941,305, 1,052,241; 1,122,397; 1,123,611; 1,143,404; 1,231,614.

Whilst for many purposes the production of stable polymer dispersions in non-aqueous organic liquid media is of considerable technical and commercial importance, there are nevertheless advantages in being able to obtain comparable dispersions in water or aqueous media. This is particularly true where the dispersions are intended for use in coating compositions, since the use of water as a carrying liquid avoids the problems of pollution associated with the evaporation of volatile organic liquids. The known aqueous polymer dispersions of the kind referred to above have indeed found extensive use in the formulation of coating compositions, but they nevertheless fall short of being wholly satisfactory for that purpose. Although, in these dispersions, some measure of steric stabilisation of the disperse phase particles may operate, as the result of the use of non-ionic surfactants or protective colloids, the fact that stabilisation is chiefly brought about by the use of low molecular weight, water-soluble surfactants can lead to problems of various kinds, notably water-sensitivity of the derived film. Attempts have previously been made to prepare aqueous dispersions in which the polymer particles are wholly stabilised by a steric mechanism analogous to that which operates in non-aqueous dispersions. These attempts, however, have not been successful; in particular, it has not proved possible to achieve adequate stability of the particles against flocculation except where the polymer content of the dispersion was so low as to render it of little value for the formulation of coating compositions.

We have now, however, found a process whereby sterically stabilised dispersions of polymers in aqueous media, having high polymer contents and hence being suitable for use in coating compositions, may be satisfactorily prepared.

According to the present invention there is provided a process for the production of a sterically stabilised dispersion containing at least 20% by weight of polymer particles of a size in the range 0.1 to 10 microns in an aqueous medium by the free radical-initiated polymerisation in the aqueous medium of one or more ethylenically unsaturated monomers in the presence in the aqueous medium as steric stabiliser of a block or graft copolymer which contains in the molecule a polymeric component of one type which is solvatable by the aqueous medium and a polymeric component of another type which is not solvatable by the aqueous medium and is capable of becoming associated with the polymer particles formed, characterised in that (i) the polymerisation is carried out at a temperature which is at least 10°C higher than the temperature at which the polymer which is formed passes from the glassy state to the rubbery state or vice versa, (ii) the aqueous medium is a mixture comprising (a) at least 30% by weight of water and (b) not more than 70% by weight of a second constituent which is miscible with water, the nature and proportions of the second constituent being such that the mixture as a whole is capable of dissolving the monomer or monomers being polymerised to the extent of at least 3% by weight but is a non-solvent for the polymer formed, and (iii) the concentration of free monomer in the polymerisation mixture is maintained throughout the process at a level such that at no time does the free monomer form a separate phase.

The second constituent of the aqueous medium may be a single substance or it may be a water-miscible mixture of two or more substances. Preferably the aqueous medium is capable of dissolving the monomer or monomers to the extent of at least 10% by weight.

By "glass transition temperature" (Tg) we mean the temperature at which the polymer which is produced in the process of the invention passes from the glassy state to the rubbery state, or vice versa. The Tg value in question will normally be that of the bulk polymer as 100% materal, but in a case where, as subsequently described, a plasticising substance is deliberately added to the polymerisation mixture for the purpose of reducing the effective Tg of the polymer, the Tg value for the purposes of the invention is that of the plasticised polymer. Even where a plasticiser for the polymer is not added as such, the "environmental" Tg of the polymer under the conditions obtained during polymerisation may be somewhat lower than the bulk Tg value referred to above, owing to some plasticisation of the polymer by residual monomer or other constituents of the polymerisation mixture. Thus it may be possible in practice to operate with a somewhat lower minimum polymerisation temperature than that indicated by the bulk Tg value. However, the effect of such fortuitous plasticisation on the Tg value is difficult to predict and, whilst it can in principle be determined by simple trial and error, it is more convenient under these conditions to choose the temperature of polymerisation by reference to the bulk Tg value. The Tg of a bulk polymer, or of a deliberately plasticised polymer, may be determined for the present purposes, by experimental methods which are well known to those skilled in the art, upon polymer of the same composition as that which is to be formed in the process of the invention but obtained by some other route, for example by polymerisation of the monomers in bulk or in solution, with subsequent addition of plasticiser where appropriate. Alternatively, Tg values can be calculated, from a knowledge of the monomer composition of the polymer, by known methods.

By way of illustration, the following bulk Tg values may be quoted (ratios stated are by weight): for a 50:50 methyl methacrylate/butyl acrylate copolymer, 4°C; for a 80:20 methyl methacrylate/2-ethylhexyl acrylate copolymer, 41°C; for a homopolymer of ethyl acrylate, −22°C; for a homopolymer of methyl methacrylate plasticised in the ratio 60:40 with a neopentyl glycol/butyl alcohol adipate polyester plasticiser, 55°C. Any of these polymer compositions can be successfully prepared in the form of an aqueous latex by the process of the invention at the polymerisation temperatures in the range 70—90°C which are normally employed for the polymerisation of acrylic monomers in the presence of an azo initiator.

Ethylenically unsaturated monomers which may be used in the process of the invention include in particular the acrylic monomers, that is say acrylic acid or methacrylic acid and their alkyl esters such as methyl methacrylate, ethyl methacrylate, butyl methacrylate, lauryl methacrylate, ethyl acrylate, butyl acrylate, hexyl acrylate, n-octylacrylate, 2-ethylhexyl acrylate, nonyl acrylate, lauryl acrylate and cetostearyl acrylate, the hydroxyalkyl esters of the same acids such as 2-hydroxyethyl acrylate, 2-hydroxyethyl methacrylate and 2-hydroxypropyl methacrylate, and the nitriles and amides of the same acids such as acrylonitrile, methacrylonitrile, acrylamide and methacrylamide. Other monomers which may be used, either alone or in admixture with these acrylic monomers, include vinyl aromatic compounds such as styrene and vinyl toluene, vinyl esters of organic and inorganic acids such as vinyl acetate, vinyl propionate, vinyl chloride and vinylidene chloride. Yet other comonomers which may be used in conjunction with any of the foregoing monomers include dialkyl maleates, dialkyl itaconates, dialkyl methylene-malonates, isoprene and butadiene.

Where it is desired that the latex polymer should be of the cross-linkable or thermosetting type, the monomers from which it is derived will normally include a proportion of at least one monomer carrying a reactive group, such as one of the hydroxy monomers mentioned above or an N-(alkoxyalkyl) derivative of acrylamide, e.g. N-(n-butoxymethyl) acrylamide, or a monomer carrying an epoxy group, such as glycidyl methacrylate.

Preferably, the temperature of polymerisation of the monomer or monomers is at least 20°C, more preferably at least 30°C, higher than the glass transition temperature of the polymer which is formed. In general, polymerisation temperatures in the range 30—80°C are convenient.

Thus, in principle, the temperature at which the polymerisation is carried out will be determined first and foremost with reference to the Tg value of the polymer which it is proposed to produce in dispersion, and, having decided upon that temperature, one will then proceed to choose an appropriate composition for the aqueous medium in which the process is to be conducted. In order to help the maintaining of a constant polymerisation temperature, it is preferred to arrange that the aqueous medium can boil under reflux at that temperature, and the nature and proportion of the water-miscible second constituent of the mixture will then be selected with this object in mind. Having regard to the fact that, for many of the monomers likely to be used in the process, an effective polymerisation

**0 013 478**

temperature will lie in the range 70—90°C, the second constituent of the aqueous medium, or a constituent thereof, will usually require to be a liquid of boiling point significantly lower than that of water.

In practice, there may be some interaction between these variables; for example, the freedom of choice of composition of the aqueous medium to suit a particular operating temperature may be restricted by the need to find a water-miscible second constituent which does not have a strong solvent action on the polymer which is formed, otherwise the aqueous medium as a whole may not be a non-solvent for the polymer and there may be significant production of polymer in solution rather than in dispersion. In the case where the aqueous medium contains a relatively volatile water-miscible liquid, the available range of formulations may be increased by including therein a further water-soluble constituent which does not boil below the boiling temperature of water; such a further constituent may be either a solid or a liquid, capable of assisting the achievement of the necessary solvent/non-solvent characteristics in the aqueous medium. It will be desirable, however, to retain a sufficient proportion of the lower-boiling constituent to permit refluxing of the polymerisation mixture. Another factor to be borne in mind is the desirability or otherwise of the continuous phase of the final dispersion permanently containing materials other than water only. Where the water-miscible liquid constituent of the aqueous medium is sufficiently volatile to permit refluxing at the polymerisation temperature, that constituent can usually, if desired, be stripped off by distillation when polymerisation is complete. In contrast, a water-miscible constituent of higher boiling point may not be removable from the continuous phase in this way.

The use of the term "aqueous medium" herein does not imply that water should always be the major constituent of the medium in which the polymerisation is carried out; in many cases, the water-miscible constituent or constituents may predominate in the mixture. In practice, as high a proportion of water as possible is employed, consistent with the aqueous medium being capable of dissolving the monomer being polymerised at least to the extent necessary to avoid the existence of a separate monomer phase, and at the same time being a non-solvent for the polymer produced. Evidently the degree of solvency for the monomer which the aqueous medium is required to possess will depend upon the concentration of free monomer in the polymerisation mixture which it is desired to maintain during the process, which in turn will depend upon the rate at which it is desired that the polymerisation should proceed. In practice, water will most usually constitute 30—70% by weight of the aqueous medium.

Substances which are suitable for use as the water-miscible constituent of the aqueous medium include in particular the lower aliphatic alcohols; the preferred member of this class is methanol, but ethanol is also very suitable. Water-methanol mixtures can be prepared having boiling points which lie both in the optimum polymerisation temperature range and sufficiently above the polymer glass transition temperatures for the process of the invention to be carried out satisfactorily in such mixtures with a variety of acrylic or vinyl monomers. Ethanol is somewhat less preferred than methanol because its greater effectiveness as a chain terminator in the polymerisation process may make it difficult to obtain a disperse polymer of high molecular weight, and also because it is a more active solvent for many polymers than is methanol. Nevertheless, ethanol is useful where the monomer mixture to be polymerised contains an appreciable proportion of styrene. In the case of polymers derived from acrylic or methacrylic esters of higher alcohols, e.g. lauryl methacrylate, a suitable water-miscible constituent is acetonitrile.

Suitable water-miscible substances having a boiling point above that of water include, for example, butanol, 2-methoxyethanol, 2-ethoxyethanol, ethylene glycol, diethylene glycol and tetraethylene glycol. In general, the proportion of such substances which it is possible to use in the aqueous medium will be relatively low because they tend to be effective solvents for many polymers.

Although simple experimentation may sometimes be called for, the formulation of a suitable aqueous medium which meets the various requirements set out above does not present any serious difficulty in the majority of cases, especially if the Tg of the polymer to be formed does not exceed 60°C.

Steric stabilisation of the polymer particles produced in the process is achieved by the presence in the polymerisation mixture of the block or graft copolymer. As already stated, this copolymer contains in the molecule one type of polymeric component which is solvatable by the aqueous medium; by "solvatable" we mean that, if that component were an independent molecule rather than part of the graft copolymer, it would actually be soluble in that medium. By virtue of this solvatable character, the polymer chains of this component consequently adopt an extended configuration in that medium so as to form a steric barrier around the particles. The copolymer also contains another type of polymeric component which is not solvatable by the aqueous medium and is capable of becoming associated with the polymer particles, the steric barrier being thereby anchored to the surface of the particles.

The block or graft copolymer stabiliser may be introduced into the polymerisation mixture in a number of different ways. Firstly, it may be introduced as a fully pre-formed material, prepared in a separate operation. Secondly, it may be formed *in situ* during the polymerisation by introducing into the reaction mixture, before polymerisation begins, a "stabiliser precursor" compound comprising in its molecule a polymeric component which is solvatable by the aqueous medium and an unsaturated

4

grouping which is capable of copolymerising with the monomer or monomers being polymerised. Thirdly, it may be formed, again *in situ,* by introducing into the reaction mixture before polymerisation begins a simple polymer of molecular weight at least 1000 which is soluble in the aqueous medium and which contains in the molecule hydrogen atoms which are abstractable by free radicals under the conditions of polymerisation and are in consequence capable of promoting grafting on to the said polymer of the monomer or monomers being polymerised.

When a pre-formed block or graft copolymer stabiliser is employed, the solvatable polymeric component thereof is, as stated above, derived from a water-soluble polymer. Examples of such polymers include non-ionic polymers such as the polyethylene glycols and their monoalkyl ethers, poly(ethylene oxide)-poly(propylene oxide) copolymers containing at least 40% of ethylene oxide and their monoalkyl ethers, polyvinylpyrrolidone, polyacrylamide, polymethacrylamide and polyvinyl alcohol. Preferably the molecular weight of this component is at least 1000 and more preferably at least 2000. The preferred solvatable components are those derived from polyethylene glycols, or their monoalkyl ethers, of molecular weight in the range 2000—4000.

The second component of the block or graft copolymer, which is capable of associating with the disperse particles, can in the simplest case be of identical or similar chemical composition to the disperse polymer itself, which by definition is insoluble in (and therefore not solvated by) the aqueous medium. Such a polymeric component will have an inherent tendency to associate with the disperse polymer. However, any polymer whilch satisfies the more general requirement of non-solvatability by the aqueous medium is. suitable as the second component. Examples of second polymeric components include polymers and copolymers derived from methyl methacrylate, ethyl acrylate, butyl acrylate, styrene, tert-butylstyrene, vinyl toluene, vinyl acetate and acrylonitrile; there may also be incorporated together with one or more of these monomers a functional monomer such as acrylic acid, methacrylic acid, 2-hydroxyethyl methacrylate and 2-hydroxyisopropyl methacrylate.

The pre-formed block or graft copolymer may range in structure from simple block copolymers of the AB, ABA or BAB types, where A and B represent the solvatable and non-solvatable components respectively, through multiple block copolymers of the ABABAB...types, to "comb" type graft copolymers of the structure $A_nB$, in which a plurality of the solvatable A components are attached at intervals to a polymer backbone constituting the hydrophobic, associatable B component. Preferably the compolymer is of this last-mentioned, "comb" type and has a slight weight excess of the solvatable components A over the non-solvatable components B, for example in a ratio of from 1.1:1. to 2:1. It is also preferred that, in this type of copolymer, the value of n, i.e. the number of A components which are attached to each B components, should be in the range 3—10.

The molecular weight of each solvatable A component is, as already stated, at least 1000 and preferably at least 2000; the molecular weight of each non-solvated B component is preferably at least 1000. Moreover, it is preferred that the total molecular weight of the copolymer should be at least 5000.

The block or graft copolymer may be made by any of the methods which are well known in the art. Thus the solvatable component may be prepared first and then copolymerised with the appropriate monomers so as to give rise to the non-solvatable, associating component *in situ,* or the non-solvatable component may be prepared first and the solvatable component then prepared *in situ.* Alternatively, the individual components can both be prepared separately and then be covalently linked to one another through the medium of suitable mutually reactive groups. Thus, for example, in the preparation of the preferred "comb" type graft copolymers, a water-soluble polymer suitable as the A component, such as the mono-methyl ether of a polyethylene glycol of molecular weight 1000 to 2000, can be converted to the acrylic or methacrylic ester, and this intermediate product can then be subjected to free radical-initiated copolymerisation with other unsaturated monomers such as styrene, ethyl acrylate or methyl methacrylate, in order to build up an appropriate non-solvatable polymer backbone constituting the B component from which are pendant a plurality of the A component side chains. Another suitable type of addition copolymer may be made by means of ionic polymerisation methods, for example by preparing a "living" polystyrene block and then reacting this with ethylene oxide in order to build up a poly-(oxyethylene) block attached thereto.

If desired, the non-solvatable component of the block or graft copolymer employed as stabiliser may contain groupings which are capable of reacting with the monomer or monomers which are being polymerised in the process of the invention. By this means, the stabiliser becomes covalently linked to the disperse polymer and the stability of the latter towards flocculation may be enhanced. Suitable reactive groupings include ethylenically unsaturated groupings which can copolymerise with the monomer, or functional groups which can react under the conditions of polymerisation with complementary functional groups in the monomer, e.g. epoxide groups which can react with a hydroxylic monomer such as 2-hydroxyethyl methacrylate. Methods of introducing such reactive groupings into the copolymer molecule will be apparent to those skilled in the art; for example, in the preparation of a "comb" type graft copolymer as outlined above, the unsaturated monomers with which the intermediate acrylic or methacrylic ester of polyethylene glycol is copolymerised may include an epoxide group-containing monomer, such as glycidyl acrylate or glycidyl methacrylate. In this way, the non-solvatable polymer backbone of the copolymer which is built up will be caused to contain pendant glycidyl groups. The latter may be utilised directly to react with a main monomer containing a functional group, such as a hydroxyl group, during the polymerisation process of the invention. Alternatively, the graft copolymer containing the glycidyl groups may be reacted further with an ethylenically unsaturated acid, such as acrylic acid or methacrylic acid, whereby there are introduced into the non-solvatable component of the copolymer double bonds which can copolymerise with the main monomer or monomers during the polymerisation process.

Where the block or graft copolymer contains reactive groupings as just described, it is preferred that there should be present on average of from 1 to 20 such groupings in each copolymer molecule.

In British Specification No. 1,544,335 (equivalent to FR—A—2 343 754) there is described a process for polymerising an ethylenically unsaturated monomer in water in the presence of a catalyst and also in the presence of a block copolymer dispersion stabiliser having certain defined characteristics. Amongst the advantages that are stated to be achieved by this process, as compared with other polymerisation techniques, are high polymer solids contents of the dispersions obtained and the avoidance of the use of any organic diluents in the polymerisation step. It is evident, however, that the process in question has in common with both conventional aqueous suspension and conventional aqueous emulsion polymerisation techniques that there is present in the reaction mixture, for the greater part of the process, unpolymerised monomer as a separate, distinct liquid phase. Notwithstanding a general statement in the said specification that the polymer particles of the dispersions obtained are in the colloidal size range of 0.1 to 10 microns, none of the examples therein gives any information bearing out this statement; on the contrary, several of those examples indicate clearly that the particles obtained are considerably larger than colloidal size. Thus it is not a characteristic of the process in question that it yields fluid dispersions of polymer in an aqueous medium in which the particles of polymer are of colloidal size and are sterically stabilised against flocculation. It may also be noted that, by way of further distinction between the present invention and the process described in British Specification No. 1,544,335, it is not essential that the copolymer stabiliser used in the process of the present invention should contain groupings which are capable of reacting with the monomer or monomers being polymerised.

The proportion of pre-formed block or graft copolymer stabiliser which is added to the polymerisation mixture will vary to some extent according to the particular disperse polymer which is involved and the disperse particle size which it is desired that the resulting dispersion should have, and the optimum proportion in any individual case can readily be found by simple experiment. However, for general guidance it may be stated that the proportion in question will usually lie in the range 0.5—20%, and more especially 2—10% by weight of the disperse polymer content of the dispersion being made. Preferably, the stabiliser is introduced along with the monomers, as explained below.

When the copolymer stabiliser is produced *in situ* during the polymerisation, according to the second alternative method referred to above, from a copolymerisable precursor compound, the precursor employed is a water-soluble derivative of a water-soluble polymer of molecular weight at least 1000 which contains in the molecule an unsaturated grouping which can copolymerise with the monomer or monomers being polymerised.

It is believed that the copolymerisation of this compound with a minor proportion of the monomer or monomers being polymerised leads to the production of an amphipathic graft copolymer which has the same general characteristics as those of the pre-formed block or graft copolymer referred to earlier. The water-soluble polymer from which the precursor is derived may be any of those polymers which have been described above in connection with the pre-formed block or graft copolymer. The preferred water-soluble polymers are again the polyethylene glycols, or their monoalkyl ethers, of molecular weight in the range 2000—4000. In the case where the precursor is an unsaturated derivative of a polyethylene glycol, or its monoalkyl ether, it may conveniently be an ester thereof with a copolymerisable unsaturated acid, for example methacrylic acid, itaconic acid or maleic acid. Esterification of the glycol, or ether thereof, may be effected by an ester-interchange reaction with a lower alkylester of the unsaturated acid, for example with methyl methacrylate; alternatively the glycol or its ether may be reacted with a suitable acid chloride, for example methacrylyl chloride, in the presence of a hydrogen chloride acceptor. Yet again, the glycol or its ether may be reacted directly with the unsaturated acid to give the ester, or with its anhydride to form a half-ester. Other suitable precursors may be obtained by reacting a carboxyl group-terminated polyvinylpyrrolidone (see, British Specification No. 1,096,912) with glycidyl methacrylate. Yet other suitable precursors may be obtained by the procedure described in our published British Patent Application No. 2 051 096A that is to say by reacting a water-soluble polyalkylene glycol or its monoalkyl ether with a cyclic aliphatic carboxylic anhydride and then reacting the resulting half-ester with an epoxy compound containing a polymerisable double bond. For example, the monoethyl ether of a polyethylene glycol is reacted with succinic anhydride and the product then condensed with glycidyl methacrylate to give a precursor containing a terminal vinyl grouping. As explained in the published GB Application referred to, this method of making a precursor is convenient because it avoids the necessity of removing any byproducts or excess reagents, which could interfere with the subsequent use of the precursor, that arises with most of the other methods discussed above.

As in the case of the use of a pre-formed stabiliser, the proportion of stabiliser precursor which is added to the polymerisation mixture will vary according to the particular circumstances, but the optimum proportion can readily be found by experiment. In most instances, this will lie in the range 0.5—20%, and more especially 2—10%, by weight of the disperse polymer content of the dispersion being made. Preferably, the precursor is introduced along with the monomers, as explained below.

In the third method outlined above, the copolymer stabiliser is produced *in situ* by including in the polymerisation mixture a simple polymer of molecular weight at least 1000 which is soluble in the aqueous medium and which contains in the molecule atoms of hydrogen which are abstractable under the conditions of polymerisation so as to give rise to polymer grafting. The simple polymer may be either linear or branched and either homopolymeric or copolymeric in nature, but it is "simple" in the sense that all polymeric components of the molecule are soluble in the aqueous medium (as contrasted with an amphipathic block or graft copolymer of the kind which acts as the actual stabilising species in the process). In practice, any water-soluble polymer is suitable, since all such polymers contain some potentially abstractable hydrogen atoms, but preferred polymers include polyvinyl pyrrolidone, polyvinyl alcohol, hydroxyalkylcelluloses, in particular hydroxyethyl cellulose, polyacrylamide, polymethacrylamide, water-soluble polyalkylene oxides including poly(ethylene oxide) and random copolymers of ethylene oxide with propylene oxide containing at least 40% of ethylene oxide, and monoalkyl ethers of such polyalkylene oxides. Other suitable polymers include water-soluble nitrogen resins, such as water-soluble melamine-formaldehyde condensates. Advantageously, the soluble polymer may contain in the molecule deliberately introduced groups which are especially susceptible to abstraction of hydrogen by a neighbouring free radical. Such groups include mercapto-, sec-butyl, cyanomethyl and $(CH_3)_2 N CH_2$- groups and examples of suitable water-soluble polymers containing these include copolymers of vinylpyrrolidone with minor proportions of dimethylaminoethyl methacrylate, sec-butyl methacrylate or vinyl cyanoacetate.

As with the pre-formed copolymer stabiliser or the copolymerisable stabiliser precursor, the proportion of soluble simple polymer which is added to the polymerisation mixture will vary to some extent according to the particular disperse polymer which is involved and the disperse particle size which it is desired that the resulting dispersion should have, but, as before, the optimum proportion in any individual case can readily be found by simple experiment. Typical proportions are in the range 0.5—20%, and more especially 5—10%, by weight of the disperse polymer content of the dispersion being made. Preferably, the soluble polymer is introduced along with the monomers, as explained below.

It may assist, in achieving a high degree of grafting of the soluble simple polymer during the polymerisation process, if the soluble polymer is pre-activated, prior to its being introduced into the polymerisation mixture. This may be done by heating it, preferably dissolved in some of the aqueous medium to be used subsequently, together with the polymerisation initiator at a temperature in the range 65° to 120°C for a period of from 5 minutes to 1 hour; the conditions chosen should, of course, be such as not to cause the soluble polymer to undergo significant degradation, cross-linking or other deleterious changes.

The process of the invention will usually require the presence in the polymerisation mixture of a suitable catalyst or initiator capable of producing free radicals. Suitable substances for this purpose are those catalysts or initiators well known for use in the polymerisation of acrylic or vinyl monomers which are soluble in the monomers. Suitable initiators include peroxy compounds such as benzoyl peroxide, lauroyl peroxide and diisopropyl peroxydicarbonate, and azo compounds such as azodiisobutyronitrile and 4,4-azobis(4-cyanovaleric acid). To some extent, the choice of initiator can influence the temperature at which the polymerisation is carried out and thus may constitute a further factor to be considered in deciding the overall composition of the polymerisation mixture as discussed above. The type of initiator chosen may also vary according to the mode in which the copolymer stabiliser is introduced into the polymerisation mixture. When a preformed block or graft copolymer is employed, it is generally preferred to use azo compounds rather than peroxy compounds in view of the tendency of the latter to promote random grafting of the monomers on to the copolymer, which could result in impairment of the stabilising properties of the copolymer. The same is true when a copolymerisable precursor for production of the copolymer stabiliser *in situ* is used. In contrast, where the copolymer is to be formed *in situ* from a soluble polymer containing abstractable hydrogen atoms, the above-mentioned characteristic of peroxy compounds is advantageous and this type of initiator is therefore then to be preferred, although azo compounds may also be used in certain cases. The amount of catalyst or initiator used will normally lie in the range 0.5% to 2% of the weight of monomer, and here also the addition is preferably made along with the monomers being polymerised.

There may also be present during the polymerisation process a chain transfer agent which, unlike the catalyst or initiator, is soluble in the aqueous medium. An example of a suitable agent is thioglycollic acid. The chain transfer agent may be used in an amount of from 0.1% to 2% of the weight of monomer. The effect of the chain transfer agent is to regulate the molecular weight of the disperse polymer and ultimately to reduce the proportion of finer particles in the disperse phase, thus increasing the average particle size. It is, however, preferred not to use a chain transfer agent when the copolymer stabiliser is to be generated from a soluble polymer having abstractable hydrogen atoms.

7

**O O 1 3 4 7 8**

In carrying out the process of the invention, it is preferred to introduce the monomer or monomers gradually into the aqueous medium, rather than to add the total monomer charge all at once. This procedure may in fact be essential in many cases if the condition is to be satisfied that at no time during the polymerisation should there be present a separate monomer phase. Where two or more monomers are involved, these may be pre-mixed before being fed into the aqueous medium. A particularly preferred procedure, whereby improved control of particle size of the disperse polymer is achieved, is to add initially to the aqueous medium a small portion, not exceeding 20% by weight, of the total monomer charge, together with an appropriate amount of initiator and the whole or the greater part of the necessary copolymer stabiliser, precursor or soluble polymer, as the case may be. This initial charge, which may be added all at once provided that the aqueous medium is capable of dissolving it completely, is allowed to polymerise first; the reaction mixture is initially clear and homogeneous, but subsequently becomes opalescent as a very fine "seed" dispersion of polymer is formed. In the case where the copolymer stabiliser is to be generated *in situ* from a soluble polymer containing abstractable hydrogen atoms, it is desirable that the whole of the soluble polymer should be added along with this initial charge of monomer. Subsequently, the main portion of the monomer charge, containing further initiator and the remainder, if any, of the stabiliser or precursor, is fed in steadily at a rate sufficient to maintain an acceptable speed of polymerisation but not such as to cause monomer to form a separate phase in the polymerising mixture. Where the polymerisation is carried out at the reflux temperature of the aqueous medium, it is preferred to arrange for this main monomer feed to mix with the returning distillate so that it is well diluted before it enters the reaction zone; this distillate will normally be rich in · the second, water-miscible constituent of the aqueous medium and will be a good solvent for the monomer being introduced. The rate of monomer feed is preferably such that the monomer is diluted with at least its own volume of returning distillate. It may be desirable in some cases to reserve a portion of the monomer charge for final addition to the polymerising mixture without further stabiliser or precursor being present.

In the case where the process of the invention is performed, as described above, by gradual "feed" of monomer to a preformed "seed" dispersion of polymer, it is possible to form the "seed" particles from monomer different from the main monomer which is subsequently introduced in the "feed" stage. Such "seed" monomer does not need to satisfy the requirement hereinbefore stated that the polymerisation temperature should be at least 10°C higher than the glass transition temperature of the polymer (viz. the "seed" polymer) which is formed. Thus, essentially any monomer may be used in the "seed" stage so long as it does not amount to more than 20% of the aggregate of its own weight and the weight of the main monomer, does not form a separate phase in the reaction mixture and gives rise to a polymer which is insoluble in the aqueous medium. For example, where the main disperse polymer is to be derived from a mixture of methyl methacrylate and 2-ethylhexyl acrylate (Tg of polymer, approximately −10°C; polymerisation temperature, 76—80°C), it is possible to employ methyl methacrylate alone (Tg of polymer, 105°C) in a "seed" stage; the main monomers are then introduced in the "feed" stage to give rise to the main disperse polymer. It is, however, to be understood that, in a "seed-feed" procedure as just described, the "feed" stage must always be conducted in accordance with the definition of the process of the invention hereinabove given.

Other substances which may be added to the polymerisation mixture include, as already mentioned, a plasticiser for the disperse polymer, where it is desired that the latter should be softer than the unmodified polymer. The addition of plasticiser may, indeed, render it possible to apply the process of the invention to certain monomers where it would otherwise fail. For example, the homopolymer of methyl methacrylate has a Tg of 105°C and it is practically impossible to operate the present process with methyl methacrylate as the sole monomer so as to produce a stable latex; however, by the addition of plasticiser the Tg can be brought down to a level where the process can successfully be carried out. Suitable plasticisers are any of those which are well known in the art for use with the particular polymer in question; they may be either soluble or insoluble in the aqueous medium. Conveniently the plasticiser may be added to the polymerisation mixture along with the monomer or monomers.

By the process of the invention, aqueous polymer dispersions may readily be made which have disperse phase contents in the range 40—60% by weight, and even as high as 70% by weight, and which are effectively stabilised against flocculation or aggregation of the disperse polymer. The polymer particles may vary considerably in size, a normal range of variation being from 0.05 to 5 microns; within this broad range, the particles in any individual dispersion will usually show a distribution of sizes, in which the largest particles may be up to ten times the diameter of the smallest. Such dispersions are especially suitable as the basis of water-borne coating composition, having a number of advantages for this purpose over conventional, charge-stabilised dispersions made by aqueous emulsion polymerisation procedure. Thus the dispersions made according to the invention are stable towards gross flocculation of the disperse phase over the whole range of pH, whereas known dispersions are stable only over limited pH ranges; they are also stable in the presence of polyvalent ions, which is not usually the case with ionically stabilised dispersions, and show improved freeze-thaw stability. All these features greatly facilitate the formulation of coating compositions from the dispersions. Furthermore, ·

0 013 478

the coating compositions themselves show greatly improved flow and film integration properties as compared with compositions based on conventional dispersions.

The coating compositions incorporating dispersions made according to the invention may be of either the thermosetting or the thermoplastic type, depending upon whether or not the disperse polymer contains any reactive groupings which can bring about cross-linking, either with or without the addition of a cross-linking agent such as a melamine-formaldehyde resin (which may be, but is not necessarily, water-soluble), in a heat treatment step subsequent to the application of the composition to a substrate. If desired, an external cross-linking agent can be introduced into the dispersion by adding it to the aqueous medium prior to polymerisation of the monomers from which the disperse polymer is formed, provided that the agent in question does not undergo any reaction under the conditions of polymerisation (which will normally be true of, for example, an amino resin at the temperature at which many acrylic or vinyl monomers are polymerised). Other desirable additives to a coating composition based on the dispersions, which may also be introduced at the polymerisation stage, are reactive silicon compounds capable of reacting with hydroxyl groups in the disperse polymer, whereby the polymer is enabled to produce a coating of enhanced durability; such a compound is, for example, the intermediate QP8-5314 marketed by Dow Corning, Inc.

The actual procedure of making polymer dispersions according to the invention is more straightforward in certain respects than the conventional emulsion polymerisation techniques, in particular that the pH of the polymerisation mixture is not critical, nor is the speed at which it is stirred; also the possibility of carrying out the polymerisation under reflux makes the maintenance of a steady reaction temperature much simpler.

The invention is illustrated but not limited by the following Examples, in which parts and percentages are by weight.

Examples 1—4

These Examples illustrate the preparation according to the invention of aqueous polymer dispersions utilising pre-formed graft copolymer stabilisers.

A. Preparation of graft copolymer stabilisers

A mixture of methoxy(polyethylene glycol), molecular weight about 2000 (2000 parts), toluene (800 parts), pyridine (800 parts), and 2:4 dimethyl-6-tert-butylphenol (1.5 parts) was heated to reflux under a nitrogen blanket, and any water being azeotroped was removed. This being accomplished, methacrylic anhydride (188 parts), was added and the temperature of the mixture was maintained at about 90°C for three hours. On cooling, a granular mass was formed and a large excess of a medium boiling point aliphatic hydrocarbon was added to complete the precipitation. (The actual choice of aliphatic hydrocarbon was not important). The product was filtered off, washed with aliphatic hydrocarbon (boiling range 60—80°C) and dried under vacuum. The product was essentially the methacrylate ester of methoxy (polyethylene glycol), containing little or no unreacted material.

A similar result was obtained if the pyridine was replaced by 2:6-lutidine and the methacrylic anhydride was replaced by methacrylyl chloride (128 parts), a warm filtration step being incorporated at the end of the reaction period to remove lutidine hydrochloride.

A mixture of the methoxy(polyethylene glycol) methacrylate thus prepared and the appropriate other monomers in the desired ratio as indicated in detail in the Examples below, the total quantity of monomers in each case being 300 parts, azo diisobutyronitrile (3.8 parts), toluene (202 parts), ethanol (202 parts), and water (45 parts) was refluxed for 2½ hours. A further quantity of azodiisobutyronitrile (2.2 parts) was added and the mixture was refluxed for a further 2 hours. The product was a 40% solution of the desired copolymer.

Example 1

Preparation of latex of a thermoplastic-type polymer having a theoretical Tg of 4°C, in 4:1 water/ethanol mixture at reflux temperature

In this Example there was first prepared a "seed" dispersion of a copolymer of methyl methacrylate and butyl acrylate by polymerisation of the monomers in a water-ethanol mixture in the presence of methoxy(polyethylene glycol) methacrylate functioning as a "precursor" for a steric stabiliser. A dispersion polymerisation of methyl methacrylate and butyl acrylate was then carried out according to the process of the invention, in the presence of the seed dispersion and of a pre-formed graft copolymer.

A mixture of methoxy(polyethylene oxide) methacrylate (3.7 parts), prepared by the method described above and having a molecular weight of about 2000, ethanol (12.5 parts), methyl methacrylate (3.7 parts), butyl acrylate (3.7 parts), and azodiisobutyronitrile (0.15 part) was added slowly over a 1 hour period to a refluxing mixture of water (340 parts) and ethanol (85 parts). This resulting mixture was refluxed for a further hour, giving a composition which was opalescent in appearance. To this composition at reflux temperature (84°C) was added slowly during 2.5 hours a mixture of methyl methacrylate (100 parts), butyl acrylate (100 parts), azodiisobutyronitrile (3 parts) and a 11.6% solution of a graft copolymer I, (206 parts). The mixture was heated for one hour more to

9

give a 27% solids content polymer dispersion with a particle size in the range 0.05—0.5$\mu$. The Tg of the main copolymer was 4°C.

The graft copolymer I was prepared by the general method described above from the methacrylate of methoxy(polyethylene oxide) (molecular weight 2000), methyl methacrylate and butyl acrylate in the weight ratios 5:3:2, the molecular weight of the acrylic portion being about 10,000. The solution of copolymer was diluted with ethanol to the stated concentration.

Comparative Example A

The procedure described in Example 1 was repeated, but with the mixture of methyl methacrylate (100 parts) and butyl acrylate (100 parts) used in the main polymerisation being replaced by methyl methacrylate alone (200 parts). The composition finally obtained in this way contained coarse, flocculated granules of polymer. In this case, the main polymer had a Tg of 110°C, which was above the polymerisation temperature of 84°C; this illustrates the necessity, according to the invention, of the polymerisation temperature being higher than the Tg of the polymer being formed, if a stable, non-flocculated dispersion is to be obtained.

Example 2

The procedure described in Example 1 was repeated, excepting that the solution of graft copolymer I was replaced by a 13.2% solution of a graft copolymer II (182 parts). The resulting polymer dispersion had a solids content of 27% and contained particles in the size range 0.05—0.5$\mu$.

The graft copolymer II was prepared by the method described above from the methacrylate of methoxy (polyethylene oxide) (molecular weight 2000), methyl methacrylate in the ratio of 1:1 by weight, the acrylic portion having a molecular weight of about 10,000. The solution of copolymer was diluted with ethanol to the required concentration.

Comparative Example B

The procedure described in Example 2 was repeated, excepting that the mixture of methyl methacrylate (100 parts) and butyl acrylate (100 parts) used in the main feed was replaced by methyl methacrylate alone (200 parts). Again, as in Comparative Example A, the Tg of the resulting polymer was greater than the polymerisation temperature; a granular, flocculated product was obtained.

Example 3
Preparation of latex of a thermoplastic-type polymer having a theoretical Tg of 4°C, in 4:1 water/ethanol mixture at reflux temperature

In this Example, the general procedure of Examples 1 and 2 was followed, but the "seed" dispersion initially prepared was of a homopolymer of methyl methacrylate; a pre-formed graft copolymer stabiliser was used both in the making of the seed dispersion and in the main polymerisation, according to the process of the invention.

A mixture of a 37% solution of graft copolymer II in ethanol (8 parts), methyl methacrylate (30 parts) and azodiisobutyronitrile (0.5 part) was added to water (455 parts) and ethanol (114 parts). The resulting clear solution was heated to reflux temperature and was maintained at that temperature for 30 minutes, during which time a fine particle size, low solids dispersion was formed. The dispersion was maintained at the reflux temperature (about 80°C), and a mixture of methyl methacrylate (149 parts), butyl acrylate (149 parts), a 37% solution of graft copolymer II in ethanol (80 parts) and azodiisobutyronitrile (8.9 parts) was added over 1.5 hours and, while still at reflux temperature during the subsequent 1.5 hours, a further mixture was added of methyl methacrylate (149 parts), butyl acrylate (149 parts), a 37% solution of graft copolymer II in ethanol (64.4 parts) and azodiisobutyronitrile (8.9 parts). Refluxing was continued for 0.25 hour longer to give a fine particle size polymer dispersion (0.06—0.5$\mu$) with a solids content of about 40%. The Tg of the resulting polymer was 4°C.

Example 4

This Example illustrates a procedure generally similar to that of Example 3, but both the seed polymer and the polymer formed during the main polymerisation are of more complex monomer composition than those of the previous Example.

To a mixture of distilled water (320 parts), methanol (165 parts) and ethanol (140 parts) at 30°C, was added a mixture of methyl methacrylate (25 parts), ethyl acrylate (28 parts), butyl acrylate (5 parts), 40% solution of graft copolymer II made as described above (60 parts) and azodiisobutyronitrile (1.3 parts). The combined mixture was heated at reflux temperature (70—80°C) for 30 minutes in order to form a seed dispersion. There was then fed into this dispersion, over a period of 3 hours and into the returning distillate, a pre-formed mixture of methyl methacrylate (225 parts), ethyl acrylate (244 parts), butyl acrylate (43 parts), 2-hydroxypropyl methacrylate (33.5 parts), N-butoxymethylacrylamide (60% solution in butanol) (56 parts), 40% solution of graft copolymer II made as described above (80 parts) and azodiisobutyronitrile (8.5 parts). When this addition was complete, a further 1 part of azodiisobutyronitrile was introduced; after 20 minutes more at reflux temperature, a still further 1 part of azodiisobutyronitrile was added, and the reaction mixture was finally heated at reflux

# 0013478

temperature for 20 minutes longer. The product was a stable dispersion of polymer of Tg 14°C; the solids content was 55%. The dispersion did not deposit any sediment on standing for many days.

Examples 5—20

These Examples illustrate the preparation according to the invention, of aqueous polymer dispersions, utilising copolymerisable stabiliser precursors.

Example 5

Preparation of latex of a thermosetting-type polymer having a theoretical Tg of 10°C, in 39:61 water/methanol mixture at reflux temperature

To a 2-litre flask fitted with stirrer, thermometer, inert gas inlet and reflux condenser with provision for feeding ingredients into the returning distillate there was charged:

Charge A

| | |
|---|---|
| Distilled water | 315 g |
| Methanol | 500 g |

There was then added the following mixture:

Charge B

| | |
|---|---|
| Methyl methacrylate | 26 g |
| Butyl acrylate | 24 g |
| Stabiliser precursor (as described below) | 17.5 g |
| Azodiisobutyronitrile | 1.0 g |

The contents of the flask were then heated at reflux temperature (73°C) for 30 minutes to form a seed dispersion of polymer. There was then commenced the dropwise feed into the returning distillate of the following mixture:

Charge C

| | |
|---|---|
| Methyl methacrylate | 210 g |
| Butyl acrylate | 165 g |
| N-Butoxymethyl acrylamide (60% solution in 3:1 butanol/xylene) | 44 g |
| Methacrylic acid | 11 g |
| Stabiliser precursor (as described below) | 14.5 g |
| Azodiisobutyronitrile | 6.7 g |

The addition of Charge C occupied 3 hours. When this was complete, there was added in the same manner, over a period of 45 minutes, the following mixture:

Charge D

| | |
|---|---|
| Methyl methacrylate | 45 g |
| Butyl acrylate | 34 g |
| N-Butoxymethylacrylamide (60% solution in 3:1 butanol/xylene) | 11 g |
| Methacrylic acid | 2.7 g |
| Azodiisobutyronitrile | 1.3 g |

One half-hour after this final feed was complete, there was added Charge E consisting of a further 0.8 g of azodiisobutyronitrile (dissolved in about 10 g of the distillate returning from the reflux condenser). Heating was thereafter maintained at reflux temperature for a further 30 minutes, and alcohol was finally removed by distillation to give a stable latex of 54% solids content. The disperse polymer had the composition methyl methacrylate 51%, butyl acrylate 40.5%, N-butoxymethyl-acrylamide 6% and methacrylic acid 2.5%; it had a molecular weight of about 140,000 and a Tg of 10°C. The disperse phase particles ranged in size from 0.1 to 1.0 micron. The stabiliser precursor used in this preparation was the methacrylic acid ester of the monomethylether of polyethylene glycol, mol.wt. 2000, prepared by the action of methacrylyl chloride upon the hydroxy compound in the presence of a hydrogen chloride acceptor. The proportion of the precursor used was 5.5% of the non-volatile content of the latex.

Example 6

Preparation of latex of thermosetting-type polymer having a theoretical Tg of 14°C, in 40:60 water/ethanol mixture under reflux.

11

**0013478**

To a flask fitted as described in Example 5 there was charged:

Charge A
| | |
|---|---|
| Distilled water | 330 g |
| Ethanol | 480 g |

followed by:

Charge B
| | |
|---|---|
| Styrene | 15 g |
| Methyl methacrylate | 11 g |
| Butyl methacrylate | 14 g |
| 2-Ethylhexyl acrylate | 12 g |
| Stabiliser precursor (as directed below) | 3.5 g |
| Azodiisobutyronitrile | 1 g |

The contents of the flask were heated at reflux temperature (76°C) for 30 minutes to form a seed polymer dispersion. There was then added a further 15 g of the stabiliser precursor (Charge C). Immediately after this there was begun the dropwise feeding, over a period of 2 hours and into the returning distillate, of the following mixture:

Charge D
| | |
|---|---|
| Styrene | 74 g |
| Methyl methacrylate | 53 g |
| Butyl methacrylate | 74 g |
| 2-Ethylhexyl acrylate | 63 g |
| 2-Hydroxypropyl methacrylate | 32 g |
| Stabiliser precursor (as described below) | 4.5 g |
| Azodiisobutyronitrile | 6 g |

This was followed by a dropwise feed over a similar period of time of an exactly similar mixture except for omission of the stabiliser precursor (Charge E). Finally, 30 minutes after completion of this last addition, a further 1 g of azodiisobutyronitrile (Charge F) was introduced and the mixture maintained at reflux temperature for 1 hour more. The product was then stripped of alcohol by distillation to give a stable latex of solids content 54%.

The disperse polymer had the composition styrene 25%, methyl methacrylate 18%, butyl methacrylate 25%, 2-ethylhexyl acrylate 22% and 2-hydroxypropyl methacrylate 10%; and a theoretical Tg of 14°C. The particle size range of the disperse phase was 0.1—1.0 micron. The stabiliser precursor used in this preparation was the methacrylic acid ester of the monomethyl ether of polyethylene glycol, mol.wt. 2200, and the proportion of precursor used amounted to 3.4% of the non-volatile content of the latex.

Example 7
Preparation of latex of thermoplastic-type polymer of Tg 4°C, in a 39:61 mixture of water and methanol under reflux
The procedure of Example 5 was repeated, but substituting for the Charges A—E there described the following:

Charge A
| | |
|---|---|
| Distilled water | 315 g |
| Methanol | 500 g |

Charge B
| | |
|---|---|
| Methyl Methacrylate | 25 g |
| Butyl acrylate | 25 g |
| Stabiliser precursor (as described below) | 18 g |
| Azodiisobutyronitrile | 1 g |

Charge C
| | |
|---|---|
| Methyl methacrylate | 206 g |
| Butyl acrylate | 206 g |
| Stabiliser precursor (as described below) | 10 g |
| Azodiisobutyronitrile | 6.7 g |

12

Charge D

| | |
|---|---|
| Methyl methacrylate | 44 g |
| Butyl acrylate | 44 g |
| Azodiisobutyronitrile | 1.3 g |

Charge E

| | |
|---|---|
| Azodiisobutyronitrile | 0.8 g |

There was thus obtained a stable, 41% solids latex of a 50:50 methyl methacrylate/butyl acrylate copolymer having a Tg of 3°C. The solids content could be raised without adversely affecting the stability of the latex by removing alcohol by distillation. The stabiliser precursor used in this procedure was the methacrylic acid ester of the monomethyl ether of polyethylene glycol, mol.wt. 2000 and the proportion used amounted to 4.8% of the non-volatile content of the latex.

Example 8

Preparation of a latex of a thermoplastic polymer having a Tg of 41°C, in a 52:48 water/ethanol mixture under reflux

The procedure described in Example 6 was repeated, but substituting for the Charges A——E there described the following:

Charge A

| | |
|---|---|
| Distilled water | 420 g |
| Ethanol | 390 g |

Charge B

| | |
|---|---|
| Methyl methacrylate | 40 g |
| 2-Ethylhexyl acrylate | 10 g |
| Stabiliser precursor (as described below) | 7 g |
| Azodiisobutyronitrile | 1 g |

Charge C

| | |
|---|---|
| Stabiliser precursor (as described below) | 23 g |

Charge D

| | |
|---|---|
| Methyl methacrylate | 320 g |
| 2-Ethylhexyl acrylate | 80 g |
| Stabiliser precursor (as described below) | 14 g |
| Azodiisobutyronitrile | 8 g |

Charge E

| | |
|---|---|
| Methyl methacrylate | 160 g |
| 2-Ethylhexyl acrylate | 40 g |
| Azodiisobutyronitrile | 4 g |

Charge F

| | |
|---|---|
| Azodiisobutyronitrile | 1 g |

The reflux temperature of the aqueous medium was 80°C.

The product was a stable, 46% solids latex of a 80:20 copolymer of methyl methacrylate and 2-ethylhexyl acrylate, having a theoretical Tg value of 41°C. The stabiliser precursor used was the same as that described in Example 5 and the proportion used was 6.3% based on the non-volatile content of the latex.

Example 9

Preparation of a latex of a thermosetting-type polymer of Tg 14°C, in an 51:26:23 mixture of water/methanol/ethanol under reflux

To a flask fitted as described in Example 5 there was charged:

Charge A

| | |
|---|---|
| Distilled water | 320 g |
| Methanol | 165 g |
| Ethanol | 140 g |

followed by

Charge B

| | |
|---|---|
| Methyl methacrylate | 25 g |
| Ethyl acrylate | 28 g |
| Butyl acrylate | 5 g |
| Stabiliser precursor (as described below) | 18.4 g |
| Azodiisobutyronitrile | 1.3 g |

The contents of the flask were heated at reflux temperature (77°C) for 30 minutes, to form a seed polymer dispersion. There was then commenced the dropwise feeding, over a period of 4 hours and into the returning distillate, of the following mixture:

Charge C

| | |
|---|---|
| Methyl methacrylate | 225 g |
| Ethyl acrylate | 244 g |
| Butyl acrylate | 43 g |
| 2-Hydroxypropyl methacrylate | 33.5 g |
| N-Butoxymethylacrylamide | 56 g |
| (60% solution in 3:1 butanol/xylene) | |
| Stabiliser precursor (as described below) | 14 g |
| Azodiisobutyronitrile | 8.5 g |

When addition of Charge C was complete, the reflux temperature was maintained for 30 minutes, then a further 1 g of azodiisobutyronitrile (Charge D) was added and the same temperature maintained for a further 1 hour. Alcohols were then removed from the batch by distillation, to give a stable, 50.5% solids latex of a polymer having the composition methyl methacrylate 39%, ethyl acrylate 43%, butyl acrylate 8%, N-butoxymethylacrylamide 5% and 2-hydroxypropyl methacrylate 5%, with a theoretical Tg value of 14°C. The particle size range of the disperse phase was 0.1—1.7 microns. The stabiliser precursor used in this preparation was the product of reacting 1 mole of polyethylene glycol, mol.wt. 4000 with 2 moles of methacrylyl chloride, and the amount used was 4.8% based on the non-volatile content of the latex.

Example 10

Preparation of latex of a thermoplastic-type homopolymer of Tg −22°C, in a 51:26:23 mixture of water/methanol/ethanol under reflux

The procedure described in Example 9 was repeated, but substituting for Charges A—D there described the following:

Charge A

| | |
|---|---|
| Distilled water | 320 g |
| Methanol | 165 g |
| Ethanol | 140 g |

Charge B

| | |
|---|---|
| Ethyl acrylate | 58 g |
| Stabiliser precursor (as described below) | 20 g |
| Azodiisobutyronitrile | 1.3 g |

Charge C

| | |
|---|---|
| Ethyl acrylate | 579 g |
| Stabiliser precursor (as described below) | 14 g |
| Azodiisobutyronitrile | 8.5 g |

Charge D

| | |
|---|---|
| Azodiisobutyronitrile | 1 g |

The product was a stable, 51.5% solids latex of ethyl acrylate homopolymer having a theoretical Tg of −22°C. The stabiliser precursor used in this preparation was the product of successively reacting the monomethyl ether of polyethylene glycol mol.wt. 2000 (1 mole) with succinic anhydride (1 mole) and then with glycidyl methacrylate (1 mole) as described in our published British Application No. 2 051 096A. The amount of the precursor used was 5% based on the non-volatile content of the latex.

Example 11

Preparation of a latex of a thermosetting-type polymer of Tg 6°C, in a 39:39:22 mixture of water/methanol/ethanol under reflux

14

The procedure of Example 5 was repeated, but substituting for Charges A—E there described the following:

| Charge A | |
|---|---|
| Distilled water | 315 g |
| Methanol | 315 g |
| Ethanol | 185 g |

| Charge B | |
|---|---|
| Styrene | 14 g |
| Methyl methacrylate | 13 g |
| Butyl acrylate | 23 g |
| Stabiliser precursor (as described below) | 13 g |
| Azodiisobutyronitrile | 1 g |

| Charge C | |
|---|---|
| Styrene | 110 g |
| Methyl methacrylate | 102 g |
| Butyl acrylate | 178 g |
| N-Butoxymethylacrylamide (60% solution in 3:1 butanol/xylene) | 39 g |
| Methacrylic acid | 4.5 g |
| Stabiliser precursor | 6.5 g |
| Azodiisobutyronitrile | 6 g |

| Charge D | |
|---|---|
| Styrene | 22 g |
| Methyl methacrylate | 20 g |
| Butyl acrylate | 35 g |
| N-Butoxymethylacrylamide (60% solution in 3:1 butanol/xylene) | 7 g |
| Methacrylic acid | 1 g |
| Azodiisobutyronitrile | 1.3 g |

| Charge E | |
|---|---|
| Azodiisobutyronitrile | 1 g |

The reflux temperature of the aqueous medium was 76°C. The product was a stable, 40% solids content latex of a polymer having the composition styrene 26%, methyl methacrylate 25%, butyl acrylate 43%, N-butoxymethylacrylamide 5% and methacrylic acid 1%, and having a theoretical Tg value of 6°C. The stabiliser precursor used in this preparation was the same as that employed in Example 5 and was used in an amount of 3.4% based on the non-volatile content of the latex. The particle size range of the disperse phase was 0.1—2 microns.

Example 12

The procedure of Example 11 was repeated, but replacing the stabiliser precursor there referred to by an equal weight of the maleic acid half-ester of the monomethyl ether of polyethylene glycol, mol.wt. 2000.

The product was again a stable polymer latex, but with a somewhat coarser particle size range, namely 0.5—6 microns.

Example 13

Preparation of a latex of a thermosetting-type polymer of Tg 10°C, in a 39:61 mixture of water and methanol

The procedure of Example 5 was repeated, but substituting for Charges A—E there described the following:

| Charge A | |
|---|---|
| Distilled water | 315 g |
| Methanol | 500 g |

| Charge B | |
|---|---|
| Methyl methacrylate | 26 g |
| Butyl acrylate | 24 g |
| Stabiliser precursor (as described below) | 20 g |
| Azodiisobutyronitrile | 1 g |

Charge C

| | |
|---|---|
| Methyl methacrylate | 210 g |
| Butyl acrylate | 165 g |
| N–Butoxymethylacrylamide | 44 g |
| (60% solution in 3:1 butanol/xylene) | |
| Methacrylic acid | 11 g |
| Stabiliser precursor (as described below) | 18 g |
| Azodiisobutyronitrile | 6.7 g |

Charge D

| | |
|---|---|
| Methyl methacrylate | 45 g |
| Butyl acrylate | 34 g |
| N-butoxymethylacrylamide | 11 g |
| (60% solution in 3:1 butanol/xylene) | |
| Methacrylic acid | 2.7 g |
| Azodiisobutyronitrile | 1.3 g |

Charge E

| | |
|---|---|
| Azodiisobutyronitrile | 0.8 g |

The product was a 41% solids stable latex of a polymer having the same composition and characteristics as that of Example 5. The stabiliser precursor used in this preparation was the glycidyl methacrylate adduct of a carboxyl group-terminated polyvinylpyrrolidone of mol.wt. 30,000, made by polymerising vinylpyrrolidone in water in the presence of 4,4-azobis(4-cyanovaleric acid) as initiator and thioglycollic acid as chain transfer agent. The amount of the stabiliser precursor used was 6.5% based on the non-volatile content of the latex.

Example 14
Preparation of latex of thermosetting-type polymer of Tg 18°C, in 50:50 water/2-methoxyethanol, not under reflux conditions
To a 500-ml flask fitted with stirrer, thermometer, dropping funnel and inert gas feed, there was charged:—

| | |
|---|---|
| Distilled water | 80 g |
| 2-Methoxyethanol | 80 g |

The charge was heated to 85—90°C and the following mixture was then added dropwise over a period of 3 hours:—

| | |
|---|---|
| Styrene | 75 g |
| Ethyl acrylate | 75 g |
| Butyl acrylate | 15 g |
| 2-Hydroxypropylmethacrylate | 18 g |
| Stabiliser precursor | 29 g |
| Azodiisobutyronitrile | 3 g |

When the addition was complete, the temperature was maintained at 85—90°C for 30 minutes, then a further 0.3 g of azodiisobutyronitrile was added and heating continued at the same temperature for 1 hour more. The product was a stable, 57% solids latex of a polymer having the composition styrene 41%, ethyl acrylate 41%, butyl acrylate 8% and 2-hydroxypropyl methacrylate 10%, and having a theoretical Tg value of 18°C. The particle size range was 0.1—1 micron. The stabiliser precursor used in this preparation was the same as that described in Example 10 and was employed in an amount of 13.7% based on the non-volatile content of the latex.

Example 15
Preparation of latex of plasticised polymethyl methacrylate in 50:25:25 water/methanol/ethanol mixture under reflux
The procedure described in Example 9 was repeated, but substituting for Charges A—D there described the following:

Charge A

| | |
|---|---|
| Distilled water | 247 g |
| Methanol | 127 g |
| Ethanol | 127 g |

16

Charge B

| | |
|---|---|
| Methyl methacrylate | 27 g |
| Polyester plasticiser (as described below) | 17 g |
| Stabiliser precursor (as described below) | 15 g |
| Azodiisobutyronitrile | 1 g |

Charge C

| | |
|---|---|
| Methyl methacrylate | 271 g |
| Polyester plasticiser (as described below) | 171 g |
| Stabiliser precursor (as described below) | 11 g |
| Azodiisobutyronitrile | 6 g |

Charge D

| | |
|---|---|
| Azodiisobutyronitrile | 1 g |

The refluxing temperature of the water/methanol/ethanol mixture was 76°C.

The product was a stable, 50% solids latex of polymethyl methacrylate/polyester plasticiser in the ratio 60:40, having a Tg of 55°C as compared with a Tg of 105°C for unplasticised polymethyl methacrylate. The polyester plasticiser used was the product of condensing together neopentyl glycol (0.67 mole), adipic adic (1 mole) and benzyl alcohol (0.67 mole). The stabiliser precursor used was the same as that employed in Example 5, and was present in an amount of 5.5% based on the non-volatile content of the latex.

Comparative Example C

Attempted preparation of unplasticised polymethyl methacrylate

The procedure of Example 15 was repeated, but omitting the polyester plasticiser. The latex produced during the early stages of addition of Charge C was much coarser than that of Example 15, and the disperse phase completely flocculated when addition has proceeded to a stage corresponding to a latex non-volatile content of about 15%.

Example 16

Use of a chain transfer agent soluble in the aqueous medium

The product of Example 9 was repeated, with the addition of 0.6 g of thioglycollic acid to Charge B and of 6 g of the same substance to Charge C (amounting in total to 1% of the monomers being polymerised).

The product was a stable latex of somewhat coarser particle size than that of Example 9, namely 0.5—8 microns; thus the maximum particle size was increased by the use of the chain transfer agent.

Comparative Examples D and E

The procedure of Example 9 was repeated, but replacing the bis(methacrylic ester) of polyethylene glycol, mol.wt. 4000 that was there used as the stabiliser precursor by a similar amount of the analogous bis-ester of polyethylene glycol, mol.wt. 1000.

The resulting latex was very coarse during the early stages of polymerisation of the monomers and the disperse phase became unstable, depositing on the walls of the flask and on the stirrer, when a non-volatile content of about 15% had been reached.

A similar result was obtained when the original stabiliser precursor of Example 9 was replaced by the methacrylic acid ester of polyethylene glycol, mol.wt. 750.

Examples 17—18

The procedure of Example 9 was repeated, using as initiator, in place of azodiisobutyronitrile, equal amounts of 4,4-azobis(4-cyanovaleric acid) or lauroyl peroxide, respectively.

Similar results to those of Example 9 were obtained. The azo initiator led to the production of a slightly finer particle size range than was recorded in that Example, namely 0.1—1 micron, while the peroxy initiator gave a somewhat coarser range, namely 0.3—4 microns.

Example 19

Preparation of latex of thermosetting-type polymer modified by a reactive silicon compound

To a 2-litre flask fitted as described in Example 5 there was charged the following:

Charge A

| | |
|---|---|
| Distilled water | 215 g |
| Methanol | 112 g |
| Ethanol | 95 g |

To this was added the following mixture:

Charge B

| | |
|---|---|
| Methyl methacrylate | 12 g |
| Butyl methacrylate | 5 g |
| Ethyl acrylate | 12 g |
| Butyl acrylate | 4 g |
| Stabiliser precursor (as described in Example 5) | 8 g |
| Azodiisobutyronitrile | 0.9 g |

and the batch was heated for 30 minutes at reflux temperature (76°C) to form a seed dispersion of polymer. There was then begun the dropwise addition, into the returning distillate, of the following mixture:

Charge C

| | |
|---|---|
| Methyl methacrylate | 112 g |
| Butyl methacrylate | 51 g |
| Ethyl acrylate | 112 g |
| Butyl acrylate | 48 g |
| 2-Hydroxypropyl methacrylate | 21 g |
| N-Butoxymethylacrylamide (60% solution in 3:1 butanol/xylene) | 24 g |
| Stabiliser precursor (as described in Example 5) | 10 g |
| Azodiisobutyronitrile | 5 g |

Three-quarters of Charge C was added over a period of 4 hours: there was then added to the remaining one-quarter of Charge C the following Charge D, and the mixture was fed dropwise into the returning distillate over a period of 1½ hours:

Charge D

| | |
|---|---|
| Silicone intermediate QP8-5314 (ex. Dow Corning Inc.) | 180 g |
| N-Butoxymethylacrylamide (60% solution as above) | 12 g |

After this last addition was completed, the batch was heated at reflux temperature for a further 30 minutes, after which there was added (Charge E) 1g of azodiisobutyronitrile. Following a final period of 1 hour at reflux temperature, the batch was vacuum stripped to give a 58% solids stable dispersion of polymer having the composition methyl methacrylate 31%, butyl methacrylate 14%, ethyl acrylate 31%, butyl acrylate 13%, 2-hydroxypropyl methacrylate 5.5% and N-butoxymethylacrylamide 5.5%, the polymer being modified to the extent of 20% by reaction of the silicone intermediate with the hydroxyl groups present. The Tg of the acrylic polymer was 7°C.

Example 20

Preparation of latex of thermosetting-type polymer containing an amino resin as cross-linking agent

To a 1-litre flask fitted with stirrer, thermometer, condenser, dropping funnel and inert gas feed, there was charged:

Charge A

| | |
|---|---|
| Distilled water | 40 g |
| Diethylene glycol | 34 g |
| Tetraethylene glycol | 7 g |
| Methylated melamine/formaldehyde resin ("Cymel" 301* ex. Cyanamid) | 54 g |

* "Cymel" is a Registered Trade Mark.

The contents of the flask were heated to 90°C and there was then added dropwise, over a period of 3 hours, the following:

18

Charge B

| | |
|---|---|
| Styrene | 95 g |
| Ethyl acrylate | 50 g |
| 2-Ethylhexyl acrylate | 15 g |
| 2-Hydroxyisopropyl methacrylate | 16 g |
| Ethanol | 25 g |
| Stabiliser precursor (as described below) | 25 g |
| Azodiisobutyronitrile | 3.3 g |

The batch was heated at 90°C for 30 minutes after this addition was completed and there was then added (Charge C) 0.5 g of azodiisobutyronitrile. Finally, heating was continued for a further 1 hour at the same temperature. The product was a stable, 72% solids latex of polymer having the composition styrene 54%, ethyl acrylate 28%, 2-ethylhexyl acrylate 9% and 2-hydroxyisopropyl methacrylate 9%. The theoretical Tg of the polymer was 26°C. The stabiliser precursor used in this preparation was the same as that described in Example 5 and was present in an amount of 11.6% based on the non-volatile content of the latex.

Comparative Example F

Attempted preparation of latex, using peroxide initiator, at a polymerisation temperature less than 10° above the Tg of the polymer in 39:61 water/methanol

An attempt was made to repeat the procedure of Example 5, but with the Charges A—E there described replaced by the following charges, and operating under reduced pressure so that the temperature of reflux was 50°C only:—

Charge A

| | |
|---|---|
| Distilled water | 245 g |
| Methanol | 389 g |
| Stabiliser precursor (as described below) | 14.7 g |

Charge B

| | |
|---|---|
| Methyl methacrylate | 28.3 g |
| Butyl acrylate | 10.4 g |
| Bis(4-t-butylcyclohexyl-<br>peroxydicarbonate) | 0.7 g |

Charge C

| | |
|---|---|
| Methyl methacrylate | 234 g |
| Butyl acrylate | 86.4 g |
| Stabiliser precursor (as described below) | 12.4 g |
| Bis(4-t-butylcyclohexyl-<br>peroxydicarbonate) | 5.0 g |

Charge D

| | |
|---|---|
| Methyl methacrylate | 50.3 g |
| Butyl acrylate | 18.5 g |
| Bis (4-t-butylcyclohexyl)-<br>peroxydicarbonate | 1 g |

Charge E

| | |
|---|---|
| Bis(4-t-butylcyclohexyl)-<br>peroxydicarbonate | 0.62 g |

Charges A and B heated together to 55°C, and vacuum was then applied to the system so as to achieve a reflux temperature of 50°C. This temperature was held for 30 minutes in order to form a seed dispersion, after which Charge C was slowly fed in. The experiment was abandoned after this feed had been continued for only 30 minutes; the dispersion had an unsatisfactory appearance from the beginning and by the end of this period a thick mass of polymer had separated out from the aqueous medium.

The composition of the polymer which it was attempted to prepare was methyl methacrylate 73%, butyl acrylate 27%, the theoretical Tg of this polymer was 43°C.

The stabiliser precursor used in this experiment was the methacrylic acid ester of the monomethyl ether of polyethylene glycol, mol.wt. 1600.

Comparative Example G
Attempted preparation of latex, using azo initiator, at a polymerisation temperature less than 10° above the Tg of the polymer, in 39:61 water/methanol

An attempt was made to repeat the procedure of Example 5, but with the Charges A—E there described replaced by the following charges, and operating under reduced pressure so that the temperature of reflux was 55°C only:

Charge A

| | |
|---|---|
| Distilled water | 245 g |
| Methanol | 389 g |
| Stabiliser precursor (as described in Comparative Example F) | 14.7 g |

Charge B

| | |
|---|---|
| Methyl methacrylate | 29.3 g |
| Butyl acrylate | 9.7 g |
| 2,2-azobis(2,4-dimethylvaleronitrile) | 0.7 g |

Charge C

| | |
|---|---|
| Methyl methacrylate | 240.6 g |
| Butyl acrylate | 79.8 g |
| Stabiliser precursor (as described in Comparative Example F) | 12.4 g |
| 2,2-azobis(2,4-dimethylvaleronitrile) | 5.0 g |

Charge D

| | |
|---|---|
| Methyl methacrylate | 51.5 g |
| Butyl acrylate | 17 g |
| 2,2-azobis(2,4-dimethylvaleronitrile) | 1.0 g |

Charge E

| | |
|---|---|
| 2,2-azobis(2,4-dimethylvaleronitrile) | 0.62 g |

Charges A and B were heated together to 60°C, and vacuum was then applied to the system so as to achieve a reflux temperature of 54—55°C. This temperature was held for 30 minutes in order to form a seed dispersion, after which Charge C was slowly fed in over a period of 3 hours. The initial seed dispersion appeared to be of good quality, but as the feeding in of Charge C progressed, "bits" were seen to form and by the end of the feed these had aggregated to form large lumps of polymer. The experiment was then abandoned.

The composition of the polymer which it was attempted to prepare was methyl methacrylate 75%, butyl acrylate 25%; the theoretical Tg of this polymer was 46°C.

Example 21—23
These Examples illustrate the preparation according to the invention of dispersions of a thermoplastic-type polymer having a theoretical Tg of about 0°C, in a 37:32 ethanol/water mixture at reflux temperature where the stabiliser is derived from a water-soluble simple polymer containing abstractable hydrogen atoms.

Example 21
A solution of 49.9 parts of polyvinyl pyrrolidone of molecular weight 40,000 (Brand K30 257/72E, manufactured by G.A.F.) in 370 parts ethanol was mixed with 320 parts of water, 2 parts of benzoyl peroxide, 30.6 parts of methyl methacrylate and 29.4 parts of 2-ethylhexylacrylate and the clear solution was then heated to reflux temperature (76—80°C). Refluxing was maintained for 15 minutes, at which stage the mixture was opalescent or milky in appearance. Refluxing was continued and over the next 2.5 hours a mixture of 228.9 parts of methyl methacrylate, 210.1 parts of 2-ethylhexyl acrylate and 4.3 parts of benzoyl peroxide was added dropwise to the mixture via the returning refluxing distillate. Refluxing was continued for a further hour. At this stage the solids content of the dispersion was 45.5% (a small loss of solvent occurred during the polymerisation). Distillation was then commenced and 200 parts of aqueous alcoholic distillate was removed, yielding a fine particle size (0.2—0.6 micron) dispersion, of solids content 55.1% and viscosity 1 Pa.s., of copolymer of Tg about 0°C.

Example 22
The procedure described in Example 21 was repeated, except that 10 parts of polyvinyl alcohol of molecular weight 29,400 (Gohsenol GL05 148/77Q manufactured by Nippon Gohsei) were used

20

instead of the 10 parts of polyvinyl pyrrolidone. At the end of the polymerisation, the solids content of the dispersion was 45.3%. After removing 253 parts of aqueous alcoholic distillate, the solids content was 60.7% and the fine particle size dispersion (0.2—2.0 microns) had a viscosity greater than 15 Pa.s.

Example 23

The procedure of Example 21 was repeated but with the 10 parts of polyvinyl pyrrolidone replaced by 10 parts of hydroxyethyl cellulose (Cellosize WPO QL manufactured by Union Carbide). This yielded a dispersion which at the end of the polymerisation had a solids content of 44.6% and a particle size range of (0.2—8.0 microns) In this case the dispersion was very viscous (viscosity greater than 1.5 Pa.s) and none of the diluent was distilled off.

"Gohsenol" and "Cellosize" are Registered Trade Marks.

Example 24

This Example illustrates the preparation of a water-borne, medium gloss non-crosslinking acrylic primer coating composition from one of the latices described above.

A. Preparation of polymer latex

A latex was prepared, by the method generally described in Example 11, of a copolymer having the composition styrene/methyl methacrylate/butyl acrylate/N-Butoxymethylacrylamide/methacrylic acid 26/25/43/5/1, the latex having a non-volatile content of 46.8%.

B. Preparation of pigment millbase

A mixture of titanium dioxide (44 g: "Kronos" RN 45 (Registered Trade Mark), strontium chromate (18.5 g), blanc fixe (76.5 g), china clay (45 g: Grade D) and the polymer latex described in (A) above (304 g) was ground overnight in a 1.14 litre capacity ball mill using 1050 g of 6.4 mm steatite balls.

C. Preparation and application of paint composition

The millbase prepared as in (B) above (488 parts) was blended with a further 200 parts of the latex prepared as in (A). The primer paint so obtained was applied to panels of hot-dip galvanised steel pretreated with "Bonderite" 1303 (Registered Trade Mark) by means of a wire-wound applicator bar so as to give a dry film thickness of 5 microns. The coating was stoved in an oven for less than 1 minute so as to attain a metal peak temperature of 193—199°C; there was then applied over the coating a commercially available ionically stabilised water-borne acrylic top-coat. When subjected to the humidity test of B.S. 3900, the performance of the panels after 500 hours was equal to that of similar panels prepared with a non-aqueous epoxy primer which is in wide commercial use. In the salt spray test of A.S.T.M. B117—64, a similar result was obtained.

Example 25

This Example illustrates the preparation of a high gloss paint from one of the polymer latices described above.

A. Preparation of polymer latices

Two latices were prepared by the general method described in Example 6, Latex (i) had the polymer composition styrene 39.7%, ethyl acrylate 53.2%, N-butoxymethylacrylamide 5.9% and methacrylic acid 1.2%, and a solids content of 44%. Latex (ii) had the polymer composition styrene 25.1%, ethyl acrylate 67.7%, N-butoxymethylacrylamide 5.9% and methacrylic acid 1.2%, and a solids content of 46.9%.

B. Preparation of millbase

A mixture of 135 g of titanium dioxide pigment ("Runa" RH 472: Registered Trade Mark of Laporte Industries Limited) and 302.8 g of the polymer latex described in (A) was ground for 24 hours in a 1.14 litre ball mill with a charge of 1050 g of 6.4 mm steatite balls. A fluid dispersion was obtained having a particle size of less than 5 microns as measured on a Hegman gauge. There was incorporated into this millbase 6.6% by weight of a water-miscible hexamethoxymethylmelamine.

C. Preparation and application of paint

The blend of millbase and melamineformaldehyde resin as prepared in (B) (13.5 parts) was mixed with the latex (ii) described above (18 parts). The paint so obtained was catalysed by addition of 0.08 part of p-toluene sulphonic acid and was then applied to pretreated aluminium by means of a wire-wound applicator bar and stoved in an oven for less than 1 minute so as to attain a metal peak temperature of 193—199°C. The coating which resulted had the following excellent characteristics:

| | |
|---|---|
| Gloss (60° meter) | 88% |
| Hardness (pencil test) | H |
| Reverse impact (Joules) | 9.04 |
| Bend test | 1T |

Example 26

This Example illustrates the preparation of an unpigmented finish suitable for spray application to an automobile body previously treated with a pigmented basecoat.

A. Preparation of polymer latex

A latex was prepared according to the general method described in Example 6, of a polymer having the composition styrene 25%, methyl methacrylate 18%, butyl methacrylate 24%, 2-ethylhexyl acrylate 21%, hydroxyisopropyl methacrylate 10% and dimethylaminoethyl methacrylate 2%; the latex had a solids content of 52%.

B. Preparation of paint

The latex described in (A) (164 parts), a melamine-formaldehyde resin ("Beetle" BE 670'; Registered Trade Mark) (12.5 parts) and water (40 parts) were mixed and p-toluene sulphonic acid (1 part) was added. The finish so obtained, which had a viscosity of 33 secs (B.S. B3 cup at 25°C) and a solids content of 45%, was sprayed on to an automobile panel, already coated with a basecoat, using a Binks (Registered Trade Mark) 19 spray gun with suction feed and 0.45 MN/m² air pressure. The film produced on the substrate was free from sagging and other defects. It was dried at room temperature for 1 hour, baked for 30 minutes at 80°C and then for a further 30 minutes at 150°C. The film had a thickness of 50 microns, a gloss of 90% (20° meter) and a Knoop hardness of 6.4—7.4. It was free from defects.

Example 27

This Example illustrates the preparation of a finish which is capable of being cured at moderate temperatures and which is therefore suitable for applications in the industrial market.

A latex was prepared by the general method of Example 9 of a polymer having the composition methyl methacrylate 39.2%, ethyl acrylate 42.7%, butyl acrylate 7.5%, hydroxyisopropyl methacrylate 5.3% and N-butoxymethylacrylamide 5.3%; the latex had a solids content of 50.1%. This latex (14.8 parts) was blended with a melamine-formaldehyde resin ("Beetle" BE 670; Registered Trade Mark) (0.5 part) and the blend was catalysed by the addition of 0.05 part of p-toluene sulphonic acid.

The paint thus obtained was applied by wire wound applicator bar to aluminium panels, which were then subjected to various curing schedules as shown in the table below: the degree of cure achieved in each case was then determined by measuring the percentage by weight of the film which remained undissolved after extraction with boiling acetone for 2 hours in a Soxhlet apparatus.

| Curing schedule | % Cure |
|---|---|
| 30 mins. at 150°C | 97 |
| 30 mins. at 120°C | 99.2 |
| 30 mins. at 100°C | 96.6 |
| 30 mins. at  80°C | 92.8 |
| 10 mins. at 150°C | 95.6 |

**Claims**

1. A process for the production of a sterically stabilised dispersion containing at least 20% by weight of polymer particles of a size in the range 0.1 to 10 microns in an aqueous medium by the free radical-initiated polymerisation in the aqueous medium of one or more ethylenically unsaturated monomers in the presence in the aqueous medium as steric stabiliser of a block or graft copolymer which contains in the molecule a polymeric component of one type which is solvatable by the aqueous medium and a polymeric component of another type which is not solvatable by the aqueous medium and is capable of becoming associated with the polymer particles formed, characterised in that (i) the polymerisation is carried out at a temperature which is at least 10°C higher than the temperature at which the polymer which is formed passes from the glassy state to the rubbery state or vice versa, (ii) the aqueous medium is a mixture comprising (a) at least 30% by weight of water and (b) not more than 70% by weight of a second constituent which is miscible with water, the nature and proportions of the second constituent being such that the mixture as a whole is capable of dissolving the monomer or monomers being polymerised to the extent of at least 3% by weight but is a non-solvent for the polymer formed, and (iii) the concentration of free monomer in the polymerisation mixture is maintained throughout the process at a level such that at no time does the free monomer form a separate phase.

2. A process as claimed in claim 1, wherein at least one monomer being polymerised is selected from acrylic acid and methacrylic acid and their esters, amides and nitriles.

3. A process as claimed in claim 1 or claim 2, wherein the temperature of polymerisation is at least 30°C higher than the glass transition temperature of the polymer which is formed.

# 0013478

4. A process as claimed in any one of claims 1 to 3, wherein the second constituent of the aqueous medium is methanol or ethanol.

5. A process as claimed in any one of claims 1 to 4, wherein the block or graft copolymer stabiliser is a preformed material and is introduced as such into the polymerisation mixture, the copolymer having the structure $A_nB$, where A represents a solvatable component of molecular weight at least 2000, B represents a non-solvatable component of molecular weight at least 1000 and n is an integer in the range 3—10, the weight ratios of all A components to all B components being from 1.1:1 to 2:1 and the total molecular weight of the copolymer being at least 5000.

6. A process as claimed in claim 5, wherein the solvatable component A is derived from a polyethylene glycol, or a monoalkyl ether thereof, of molecular weight in the range 2000—4000.

7. A process as claimed in any one of claims 1 to 4, wherein the copolymer stabiliser is formed *in situ* during the polymerisation from a precursor compound comprising in its molecule a polymeric component solvatable by the aqueous medium and derived from a polyethylene glycol, or a monoalkyl ether thereof, of molecular weight 2000—4000, and an unsaturated grouping which is capable of copolymerising with the monomer or monomers being polymerised.

8. A process as claimed in claim 7, wherein the precursor is an ester of the polyethylene glycol, or monoalkyl ether thereof, with a copolymerisable unsaturated acid.

9. A process as claimed in any one of claims 1 to 4, wherein the copolymer stabiliser is formed *in situ* during the polymerisation from a simple polymer of molecular weight at least 1000 which is soluble in the aqueous medium and which contains in the molecule hydrogen atoms which are abstractable by free radicals under the conditions of polymerisation and can in consequence promote grafting on to the said polymer of the monomer or monomers being polymerised.

10. A process as claimed in claim 9, wherein the soluble simple polymer is selected from polyvinylpyrrolidone, polyvinyl alcohol, hydroxyethyl cellulose, polyacrylamide, polymethacrylamide, poly(ethylene oxide) and its monoalkyl ethers, and random ethylene oxide-propylene oxide copolymers containing at least 40% of ethylene oxide and their monoalkyl ethers.

11. A process as claimed in any one of claims 1 to 10, wherein there is initially added to the aqueous medium a small portion, not exceeding 20% by weight, of the total monomer charge, which portion is allowed to polymerise first to form a seed dispersion of polymer and is subsequently followed by the addition thereto and polymerisation of the main portion of the monomer charge.

12. A modification of the process as claimed in any one of claims 1 to 10, wherein the aqueous medium already contains a seed dispersion of polymer formed by the previous polymerisation therein of monomer which is different from the main monomer which is to be polymerised as hereinbefore specified, the amount of such different monomer not exceeding 20% of the aggregate of its own weight and the weight of the main monomer.

## Revendications

1. Procédé de production d'une dispersion stabilisée par voie stérique contenant au moins 20% en poids de particules de polymère d'une dimension de l'intervalle de 0,1 à 10 $\mu$m dans un milieu aqueux par polymérisation initiée par radicaux libres dans le milieu aqueux d'un ou plusieurs monomères éthyléniquement insaturés, en présence, dans le milieu aqueux, comme stabilisant stérique, d'un copolymère séquencé ou greffé qui contient dans sa molécule un constituant polymère d'un type qui est solvatable par le milieu aqueux et un constituant polymère d'un autre type qui n'est pas solvatable par le milieu aqueux et qui est capable de venir s'associer avec les particules de polymère formées, caractérisé en ce que (i) la polymérisation est exécutée à une température qui est supérieure d'au moins 10°C à la température à laquelle le polymère qui est formé passe de l'état vitreux à l'état caoutchouteux ou réciproquement, (ii) le milieu aqueux est un mélange comprenant (a) au moins 30% en poids d'eau et (b) pas plus de 70% en poids d'un second constituant qui est miscible avec l'eau, la nature et les proportions du second constituant étant telles que le mélange dans l'ensemble soit capable de dissoudre le monomère ou les monomères en cours de polymérisation à raison d'au moins 3% en poids, mais soit un non-solvant pour le polymère formé, et (iii) la concentration du monomère libre dans le mélange de polymérisation est maintenue pendant tout le procédé à une valeur telle qu'à aucun moment du polymère libre ne forme une phase séparée.

2. Procédé suivant la revendication 1, dans laquelle au moins un monomère en cours de polymérisation est choisi parmi l'acide acrylique et l'acide méthacrylique, de même que leurs esters, amides et nitriles.

3. Procédé suivant la revendication 1 ou 2, dans lequel la température de polymérisation est supérieure d'au moins 30°C à la température de transition vitreuse du polymère qui est formé.

4. Procédé suivant l'une quelconque des revendications 1 à 3, dans lequel le second constituant de milieu aqueux est le méthanol ou l'éthanol.

5. Procédé suivant l'une quelconque des revendications 1 à 4, dans lequel le polymère séquencé ou greffé stabilisant est une substance formée au préalable et est introduit tel quel dans le mélange de polymérisation, le copolymère ayant la structure $A_nB$ où A représente un constituant solvatable d'un poids moléculaire d'au moins 2000, B représente un constituant non solvatable d'un poids moléculaire

23

d'au moins 1000 et n représente un nombre entier de 3 à 10, le rapport pondéral de tous les constituants A à tous les constituants B étant de 1,1 à 2:1 et le poids moléculaire total de copolymère étant d'au moins 5000.

6. Procédé suivant la revendication 5, dans lequel le constituant solvatable A dérive d'un polyéthylèneglycol, ou d'un éther monoalcoylique de celui-ci, d'un poids moléculaire de l'intervalle de 2000—4000.

7. Procédé suivant l'une quelconque des revendications 1 à 4, dans lequel le copolymère stabilisant est formé in situ pendant la polymérisation à partir d'un composé précurseur comprenant dans sa molécule un constituant polymère solvatable par le milieu aqueux et issu d'un polyéthylèneglycol, ou d'un éther monoalcoylique de celui-ci, d'un poids moléculaire de 2000—4000, et un radical insaturé qui est capable de copolymérisation avec le monomère ou les monomères en cours de polymérisation.

8. Procédé suivant la revendication 7, dans lequel le précurseur est un ester du polyéthylèneglycol, ou d'un éther monoalcoylique de celui-ci, avec un acide insaturé copolymérisable.

9. Procédé suivant l'une quelconque des revendications 1 à 4, dans lequel le copolymère stabilisant est formé in situ pendant la polymérisation à partir d'un polymère simple d'un poids moléculaire d'au moins 1000 qui est soluble dans le milieu aqueux et qui contient dans sa molécule des atomes d'hydrogène qui sont éliminables par des radicaux libres dans les conditions de la polymérisation et peuvent par conséquent favoriser le greffage du monomère ou des monomères en cours de polymérisation sur ce polymère.

10. Procédé suivant la revendication 9, dans lequel le polymère simple soluble est choisi parmi la polyvinylpyrrolidone, l'alcool polyvinylique, l'hydroxyéthylcellulose, le polyacrylamide, le polyméthacrylamide, le poly(oxyde d'éthylène) et ses éthers monoalcoyliques et les copolymères statistiques d'oxyde d'éthylène et d'oxyde de propylène contenant au moins 40% d'oxyde d'éthylène et leurs éthers monoalcoyliques.

11. Procédé suivant l'une quelconque des revendications 1 à 10, dans lequel on ajoute initialement au milieu aqueux une petite fraction n'excédant pas 20% en poids de la charge monomère totale, on laisse polymériser cette fraction d'abord pour former une dispersion d'ensemencement de polymère et on ajoute ensuite, puis on polymérise la fraction principale de la charge de monomère.

12. Variante du procédé suivant l'une quelconque des revendications 1 à 10, dans laquelle le milieu aqueux contient déjà une dispersion d'ensemencement de polymère formée par polymérisation préalable dans celui-ci d'un monomère qui est différent du monomère principal qui doit être polymérisé tel que spécifié ci-dessus, la quantité de ce monomère différent n'excédant pas 20% de la somme de son propre poids et du poids du monomère principal.

**Patentansprüche**

1. Verfahren zur Herstellung einer sterisch stabilisierten Dispersion, die mindestens 20 Gew.-% Polymerteilchen einer Gröbe im Bereich von 0,1 bis 10 $\mu$m enthält, in einem wäßrigen Medium, bei welchem eine durch freie Radikale initiierte Polymerisation ein oder mehrerer äthylenisch ungesättigter Monomere in dem wäßrigen Medium durchgeführt wird, wobei in dem wäßrigen Medium als sterischer Stabilisator ein Block- oder Pfropfcopolymer vorliegt, welches im Molekül eine polymere Komponente einer Art, die durch das wäßrige Medium solvatisierbar ist, und eine polymere Komponente anderer Art, die durch das wäßrige Medium nicht solvatisierbar ist und mit den gebildeten Polymerteilchen verknüpft werden kann, enthält, dadurch gekennzeichnet, daß (i) die Polymerisation bei einer Temperatur ausgeführt wird, die mindestens 10°C höher als die Temperatur liegt, bei der das gebildete Polymer vom glasartigen Zustand in den gummiartigen Zustand übergeht oder umgekehrt, (ii) das wäßrige Medium ein Gemisch ist, das (a) mindestens 30 Gew.-% Wasser und (b) nich mehr als 70 Gew.-% eines zweiten mit Wasser mischbaren Bestandteils enthält, wobei die Art und die Menge des zweiten Bestandteils so sind, daß das Gemisch als Ganzes dazu fähig ist, das zu polymerisierende Monomer oder die zu polymerisierenden Monomere in einem Ausmaß von mindestens 3 Gew.-% aufzulösen, aber für das gebildete Polymer ein Nichtlöser ist, und (iii) die Konzentration des freien Monomers im Polymerisationsgemisch während des gesamtem Verfahrens auf einem solchen Wert gehalten wird, daß zu keinem Zeitpunkt das freie Monomer eine gesonderte Phase bildet.

2. Verfahren nach Anspruch 1, bei welchem mindestens ein zu polymerisierendes Monomer ausgewählt wird aus Acrylsäure und Methacrylsäure sowie deren Estern, Amiden und Nitrilen.

3. Verfahren nach Anspruch 1 oder Anspruch 2, bei welchem die Polymerisationstemperatur mindestens 30°C höher liegt als die Glasübergangstemperatur des sich bildenden Polymers.

4. Verfahren nach einem der Ansprüche 1 bis 3, bei welchem der zweite Bestandteil des wäßrigen Mediums Methanol oder Äthanol ist.

5. Verfahren nach einem der Ansprüche 1 bis 4, bei welchem der Block- oder Pfropfcopolymerstabilisator ein vorher hergestelltes Material ist und als solches in das Polymerisationsgemisch eingeführt wird, wobei das Copolymer die Struktur $A_nB$ aufweist, worin A eine solvatisierbare Komponente mit einem Molekulargewicht von mindestens 2000 darstellt, B eine nicht-solvatisiebare Komponente mit einem Molekulargewicht von mindestens 1000 darstellt und n eine Ganzzahl im Bereich von 3—10 ist, die Gewichtsverhältnisse von allen A-Komponenten zu allen B-Komponenten von 1,1:1 bis 2:1 betragen und das gesamte Molekulargewicht des Copolymers mindestens 5000 ist.

6. Verfahren nach Anspruch 5, bei welchem die solvatisierbare Komponente A sich von einem Polyäthylenglycol oder einem Monoalkyläther davon mit einem Molekulargewicht im Bereich von 2000 bis 4000 ableitet.

7. Verfahren nach einem der Ansprüche 1 bis 4, bei welchem der Copolymerstabilisator in situ während der Polymerisation aus einer Vorläuferverbindung gebildet wird, die in ihrem Molekül eine durch das wäßrige Medium solvatisierbare und sich von einem Polyäthylenglycol oder einem Monoalkyläther davon mit einem Molekulargewicht von 2000—4000 ableitende polymere Komponente sowie eine ungesättigte, zur Copolymerisation mit dem zu polymerisierenden Monomer oder den zu polymerisierenden Monomeren fähige Gruppierung enthält.

8. Verfahren nach Anspruch 7, bei welchem der Vorläufer eiñ Ester des Polyäthylenglycols oder des Monoalkyläthers davon mit einer copolymerisierbaren ungesättigten Säure ist.

9. Verfahren nach einem der Ansprüche 1 bis 4, bei welchem der Copolymerstabilisator in situ während der Polymerisation aus einem einfachen Polymer mit einem Molekulargewicht von mindestens 1000 gebildet wird, welches in dem wäßrigen Medium löslich ist und welches im Molekül Wasserstoffatome enthält, die durch freie Radikale unter den Polymerisationsbedingungen abziehbar sind und welche infolgedessen ein Aufpfropfen des zu polymerisierenden Monomers oder der zu polymerisierenden Monomere auf das genannte Polymer verursachen können.

10. Verfahren nach Anspruch 9, bei welchem das lösliche einfache Polymer ausgewählt wird aus Polyvinylpyrrolidon, Polyvinylalkohol, Hydroxyäthylcellulose, Polyacrylamid, Polymethacrylamid, Poly(äthylenoxid) und dessen Monoalkyläthern sowie aus Athylenoxid/Propylenoxid-Randomcopolymeren, die mindestens 40% Äthylenoxid enthalten, und deren Monoalkyläthern.

11. Verfahren nach einem der Ansprüche 1 bis 10, bei welchem zunächst zu dem wäßrigen Medium ein kleiner Anteil von nicht mehr als 20 Gew.-% der gesamten Monomercharge zugegeben wird, welcher Anteil zunächst zur Bildung einer Impfpolymerdispersion polymerisieren gelassen wird, worauf sich dann die Zugabe und Polymerisation des Hauptteils der Monomercharge anschließt.

12. Abwandlung des Verfahrens nach einem der Ansprüche 1 bis 10, bei welcher das wäßrige Medium bereits eine Impfpolymerdispersion enthält, die dadurch hergestellt wird, daß in dem wäßrigen Medium vorher ein Monomer polymerisiert wird, welches sich von dem oben spezifizierten, zu polymerisierenden Hauptmonomer unterscheidet, wobei die Menge dieses unterschiedlichen Monomers 20% der Summe aus seinem eigenen Gewicht und dem Gewicht des Hauptmonomers nicht überschreitet.